# EUROPEAN PATENT APPLICATION

(11) **EP 3 051 386 A1**
(43) Date of publication of application: **03.08.2016**
(21) Application number: 15153189.4
(22) Date of filing: 30.01.2015
(51) Int. Cl.: G06F 3/01, G06K 9/00

(54) **Eye tracking system and method**

(71) Applicant: 4tiitoo GmbH, 80331 München (DE)
(72) Inventor: Meyer, Tore, 80337 Munich (DE); Odörfer, Stephan, 80802 Munich (DE)
(74) Representative: Qip Patentanwälte Dr. Kuehn & Partner mbB

(57) **Abstract**

A method for eye tracking comprises: receiving a visual field image (20) showing at least a part of a visual field (14) of a person; receiving a reflection image (24) acquired with a camera (16) observing an eye (18) of the person, the reflection image (24) comprising a reflection (48) on the eye (18) of at least a part of the visual field (14); identifying at least two object features (22) in the visual field image (20) and the reflection image (24), wherein each object feature (22) corresponds to an object in the visual field (14) of the person, which object is shown in the visual field image (20) and which object is reflected on the eye (18); and determining a gaze direction (46) of the eye (18) based on a geometrical model (36) of the eye (18) and on positions of the at least two object features (22).

## Description

### FIELD OF THE INVENTION

The invention relates to a method, a computer program and a computer-readable medium for eye tracking. Furthermore, the invention relates to an eye tracking system and to virtual reality glasses.

### BACKGROUND OF THE INVENTION

Remote eye tracking and glasses based eye tracking at high precision levels is typically done using infrared illuminators, recording a video feed of the reflections generated by these light sources from the users eyes and then using algorithms and a model of the human eye to detect the point of gaze.

For example, WO 2004/045399 A1 describes a method and a system for gaze detection, in which infrared light sources are used for generating the reflections on the eye. In US 5,861,940 cited therein, and which relates to gaze tracking with a laser, it is additionally explained in more detail, how the gaze direction can be determined from the geometrical setup of a gaze tracking system.

One critical aspect of solution with dedicated light sources may be the additional power supply required for the light sources, especially in mobile usage such as mobile phones, virtual reality and augmented reality glasses. Usually, a certain amount of infrared light is needed to create a distinguishable marker in contrast to other light sources. Even with more efficient infrared light sources, the amount of energy required is determined by physics and efficiency of infrared light generation.

### DESCRIPTION OF THE INVENTION

The capabilities of cameras to capture images at very high ISO rates, i.e. high sensitivity with respect to light, higher dynamic ranges, higher resolutions and low energy consumption is increasing and the cost in energy for post-processing and in-depth analysis of these captured video feeds is decreasing constantly.

It is an object of the invention to provide an eye tracking method and eye tracking system with low energy consumption. A further object of the invention is to decrease the complexity of an eye tracking system.

These objects are achieved by the subject-matter of the independent claims. Further exemplary embodiments are evident from the dependent claims and the following description.

An aspect of the invention relates to a method for eye tracking. The method may completely be performed by a computer such as a PC, laptop, smartphone or tablet. It has to be understood that eye tracking may relate to methods determining the gaze direction of one or two eyes, which for example may be provided with at least one angle with respect to a forward direction. On the other hand, gaze tracking may relate to methods determining a gaze point, for example a point on a display screen, i.e. a point at which a person is looking.

According to an embodiment of the invention, the method comprises: receiving a visual field image showing at least a part of a visual field of a person; receiving a reflection image acquired with a camera observing an eye of the person, the reflection image comprising a reflection on the eye of at least a part of the visual field; identifying at least two object features in the visual field image and the reflection image, wherein each object feature corresponds to an object in the visual field of the person, which object is shown in the visual field image and which object is reflected on the eye; and determining a gaze direction of the eye based on a geometrical model of the eye and on positions of the at least two object features.

The eye tracking method may be based on comparing a corneal reflection with an image of the source of the reflection. In general, object features of already present light sources, such as real objects illuminated by environmental light or display, which usually are a light source of its own, and their reflections on an eye are used for determining the gaze direction of the eye. With the method, for example, reflections of a video feed or reflections of the natural environment may be used for gaze tracking.

The visual field image may be an image from a display, which image directly may be read from the video memory for the display, or may be captured with a camera, for example may be an environment image. On the other hand, the reflection image is an image of an eye of a person that shows reflections of objects that are also shown in the visual field image. It is not necessary that the person directly looks at the objects. The objects/part of the content of the visual field image only has to be reflected by the eye. The visual field image and/or the reflection image may comprise 2D image data, such as pixels with grayscale information. The visual field image and/or the reflection image may comprise 3D image data, such as pixels with depth information.

Usually, not only one visual field image and/or reflection image will be processed with the method, but a sequence of such images, which may be captured with a synchronized sampling rate and/or with time-stamps.

When at least two matching object features have been identified in the visual field image and the reflection image, the position of the object features (i.e. from the corresponding reflections) on the eye may be determined and from this, with a geometrical model of the eye, the gaze direction may be determined.

Depending on the geometrical setup of the eye tracking system, for example, whether the eyes (the person), the cameras and/or the display may move with respect to each other, it may be necessary to determine further parameters such as the position of the camera and/or the position of the eye. Otherwise, these parameters may be encoded into the system and/or may be determined by calibrating the system.

In the case, when the distance between object features and eyes and between eyes and the camera for capturing the reflection image is fixed, which may be the case for virtual reality glasses, the positions of the object features to be determined may be two-dimensional positions. These positions may be based on the position of the object features in the reflection image and/or the visual field image.

With the method, the requirement for artificial light sources to do eye tracking is eliminated or at least greatly reduced. A system for performing the method does not require additional physical space for illuminators. The method may be more robust against strong external lighting conditions like sun glares in the frequency range of the illuminators. There is no need for light sources that may cause disturbances in extremely low lit environments such as virtual reality glasses.

According to an embodiment of the invention, visual field object features are extracted from the visual field image with an image processing algorithm and reflected object features are extracted from the reflection image with an image processing algorithm. The visual field object features and the reflected object features are matched with each other to determine object features identifiable in both the visual field image and the reflection image. The object features may be identified in the visual field image and the reflection image with an image recognition and/or pattern detection algorithm, which, for example, detect lines, edges, corners or special features such as rectangles rotated in space. Object features may be the corner of a window or the corner of a display image, which may have a high contrast in the visual field image and the reflection image. Object features also may be edges or corners of objects or shadows, for example bright windows shown on a dark background on a display or edges of furniture and/or a room.

For example, the object features in the visual field image and the reflection image may be detected or identified independently from each other and then may be matched with each other.

According to an embodiment of the invention, the visual field image and the reflection image are matched with each other by distorting at least one of the visual field image and the reflection image such that object features overlap. At least one of the visual field image and the reflection image may be restricted to an area containing overlapping object features. It also may be possible that firstly the visual field image and the reflection image are restricted to areas containing the same or a similar content. The two images or at least areas of the two images may then be distorted such that their difference (which may be calculated pixelwise) is minimized. After that, object features may be determined in one of the images and their positions in both images may be determined based on the distortion.

According to an embodiment of the invention, three-dimensional positions of the objects corresponding to the object features are determined and the gaze direction is determined based on the three-dimensional positions of the objects. In the case, the distance of the object features from the eye is not known, these distances may be determined from three-dimensional positions of these object features. It may be possible that the visual field image is an image of a 3D camera that contains depth information, from which three-dimensional positions of the objects and the object features may be determined. Alternatively or additionally, two visual field images may be captured from different directions, such that the distance and/or three-dimensional position of the object features may be determined from the parallax of these features in the two visual field images.

According to an embodiment of the invention, a three-dimensional position of the eye is determined and the gaze direction is determined based on the three-dimensional position of the eye. For example, in the case, when the position of the eye is not known, which may be the case, when the camera observing the eye is not fixedly positioned with respect to the eye, the position of the eye may be determined to determine the distance between the camera observing the eye and/or the object features reflected on the eye.

Furthermore, the camera for capturing the visual field image and/or the camera for reflecting the eye may comprise or may be fixedly positioned with respect to a positioning sensor that provides positioning information of the respective camera. Such a positioning sensor may be used, when one of the cameras may be freely moved in space.

According to an embodiment of the invention, the geometrical model of the eye comprises a spherical model of a cornea. The geometrical model of the eye may be a three-dimensional model of the eye, for example the model may comprise a geometrical model of the cornea which is the transparent part of the eye in front of the iris and pupil. The cornea substantially has the form of a spherical calotte. In principle, the eye may be seen as a curved mirror. Usually, the cornea reflects most of the incident light.

By assuming that the cornea is a sphere with a specific radius and a specific center, the position (i.e. center) of this sphere may be calculated from the positions of the object features in the two images. With the relative position of the center of the sphere of the cornea with respect of the position (i.e. center) of the eye, the gaze direction may be determined.

According to an embodiment of the invention, the visual field image is displayed on a display in the visual field of the person. In the case, a display is reflected in the eye, the visual field image of the environment may not be captured with a camera, but frames of the video stream to the display may be used as visual field image. For example, the visual field image may be displayed on a display of virtual reality glasses or the other way around, the content of the display of virtual reality glasses may directly be used as visual field image.

According to an embodiment of the invention, the method further comprises: displaying at least one visual marker at a specific position on the display, in the case when the gaze direction is not determinable from the identified object features. The gaze direction may be determined based on the specific position. In the setup where the video feed to the display can be controlled or augmented, optionally one or multiple visual markers like bright spots can be displayed on the display, for example, if the identified object features are not sufficient for eye tracking.

According to an embodiment of the invention, the visual field image is acquired with a second camera observing the visual field of the person. In the case, the visual field image cannot be extracted from a video feed, the visual field image may be provided by a further camera, which, for example, may be a 2D camera or a 3D camera. With a 3D camera, additionally, depth information may be provided with the visual field image. However, it also may be possible that the visual field image is a pure 2D image.

According to an embodiment of the invention, two separate reflection images are determined for two eyes of the person and wherein gaze directions for each eye are determined based on the two reflection images. The method may be performed for one eye or for both eyes simultaneously. If done with both eyes, additional information on the positioning of the objects in the 3D space may be created a priori based on the comparison of the two reflection images.

According to an embodiment of the invention, three-dimensional positions of the objects corresponding to the object features are determined based on comparing the two reflection images. It may be possible to determine the position of the object features in real 3D space with the aid of the parallax of the object features identified in the two reflection images.

Further aspects of the invention relate to a computer program for eye tracking, which, when being executed by a processor, is adapted to carry out the steps of the method as described in the above and in the following, and to a computer-readable medium, in which such a computer program is stored.

A computer-readable medium may be a floppy disk, a hard disk, an USB (Universal Serial Bus) storage device, a RAM (Random Access Memory), a ROM (Read Only Memory), an EPROM (Erasable Programmable Read Only Memory) or a FLASH memory. A computer-readable medium may also be a data communication network, e.g. the Internet, which allows downloading a program code. In general, the computer-readable medium may be a non-transitory or transitory medium.

A further aspect of the invention relates to an eye tracking system, which comprises a first camera for acquiring images of an eye, such that a reflection of an object on the eye is acquired by the camera, a second camera for observing the visual field of the person and for generating the visual field image or a display for displaying the visual field image, such that the visual field image is reflected on the eye of the person, and an eye tracking device for performing the method for eye tracking as described in the above and in the following.

The system may comprise two cameras, each camera observing one of the eyes of the person.

For example, the system may comprise an eye camera directed to the head of the person for observing the eyes, which camera, for example, may be fixedly connected or mounted to a display, the person is looking at. The eye camera also may be mounted to eye tracking glasses and thus may be fixedly installed with respect to the eye.

Additionally, the system may comprise an environment camera, which is directed into a direction such that a visual field of the person may be observed. For example, the environmental camera may be directed to a display the person is looking at or into a room, in which the person is located.

The eye tracking device, which provides the computing capabilities for performing the method may be a PC, a laptop, a smartwatch, a smartphone, a mobile phone, a gaming console, and an embedded system, for example provided in a TV.

In the case of a smartphone or tablet computer, which usually has a built in environment camera (at the side opposite to the display) and a built-in face camera (at the side of the display), these cameras may be used for generating the visual field image and the reflection image. The smartphone or tablet computer may be held in the usual way in front of the face and the environment camera may be directed to the environment. With a visual field image received from the environment camera and a reflection image from the face camera, software installed in the smartphone may perform the method and, for example, may determine at which object in the environment, such as a special tree, a church or a house, the person is looking.

It has to be understood that features of the method, the computer program and the computer-readable medium as described in the above and in the following may be features of the eye tracking system as described in the above and in the following, and vice versa.

A further aspect of the invention relates to virtual reality glasses, which comprise a support for mounting the virtual reality glasses to a head of a person, a display mounted to the support for displaying an image in the visual field of the person, and at least one camera mounted to the support and directed at an eye position for acquiring images of an eye of the person wearing the virtual reality glasses.

To enable eye tracking, these virtual reality glasses do not need additional light sources, which would have to be provided for eye tracking with fixed light sources. Weight and power consumption may be saved.

The virtual reality glasses may comprise two cameras, wherein each camera is directed to one of the eyes of the person. The virtual reality glasses may comprise an embedded device (also mounted to the support of the virtual reality glasses) for performing the method for eye tracking as described in the above and in the following. It also may be possible that the virtual reality glasses are communicatively connected with an external eye tracking device (such as a PC, laptop, etc.), which performs the eye tracking method as described in the above and in the following.

The display of the virtual reality glasses may be at least partially transparent, such that the virtual reality glasses also may be used for generating augmented reality. However, it also may be possible that the display and/or support are completely intransparent and obstruct all environmental light from the eyes of the person.

The display may be provided by a smartphone that may be mounted to the support, such that its display is directed towards the eyes of the person. The smartphone may provide the eye tracking device for performing the eye tracking method as described in the above and in the following, i.e. the smartphone may be connected with the one or two cameras.

These and other aspects of the invention will be apparent from and elucidated with reference to the embodiments described hereinafter.

### BRIEF DESCRIPTION OF THE DRAWINGS

Below, embodiments of the present invention are described in more detail with reference to the attached drawings.
Fig. 1 schematically shows an eye tracking system according to an embodiment of the invention.
Fig. 2 schematically shows an eye tracking system according to a further embodiment of the invention.
Fig. 3 schematically shows a visual field image captured by the eye tracking system of Fig. 1.
Fig. 4 schematically shows a reflection image captured by the eye tracking system of Fig. 1.
Fig. 5 schematically shows a reflection image captured by the eye tracking system of Fig. 2.
Fig. 6 shows a diagram illustrating an eye model used in a method for eye tacking according to a further embodiment of the invention.
Fig. 7 shows a flow diagram for a method for eye tacking according to a further embodiment of the invention.

The reference symbols used in the drawings, and their meanings, are listed in summary form in the list of reference symbols. In principle, identical parts are provided with the same reference symbols in the figures.

### DETAILED DESCRIPTION OF EXEMPLARY EMBODIMENTS

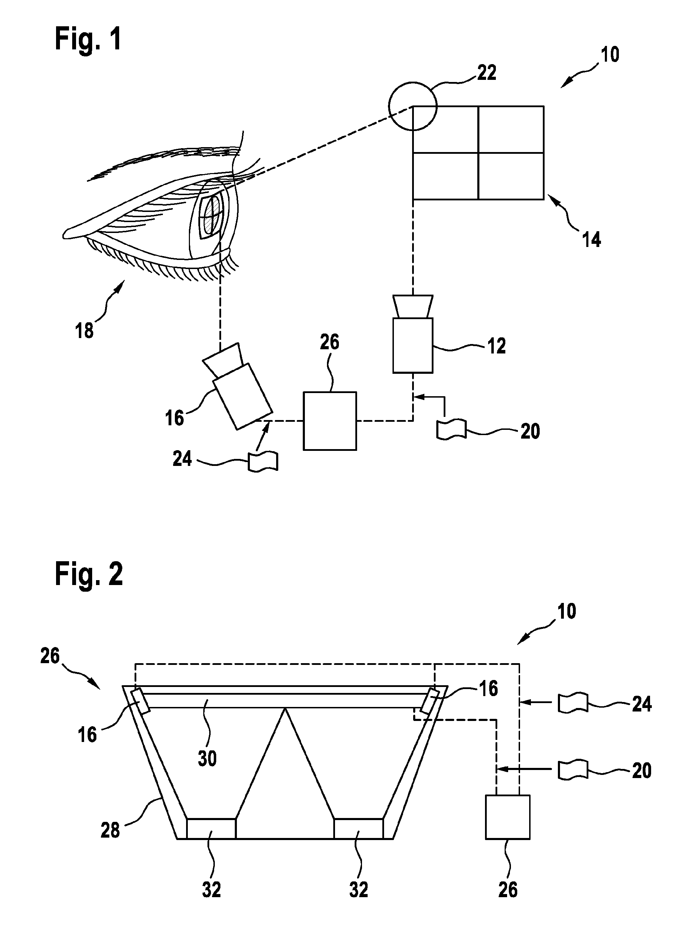

Fig. 1 shows an eye tracking system 10 comprising an environment camera 12 for capturing a visual field 14 of a person and an eye camera 16 for capturing an eye 18 of the person. The camera 12 is aligned such that a visual field image 20 produced by the camera 12 comprises object features 22, which are reflected by the eye 18 and are also present in a reflection image 24 produced by the eye camera 16. The object features 22 may be corners of objects such as windows (as depicted), edges or bright spots.

The environment camera 12 may be a 2D camera and may produce a 2D image 20, which for example may be a grayscale or color image with pixel information. The environment camera 12 also may be a 3D camera and the image 20 additionally may comprise depth information.

The eye camera 16 may be a 2D camera and may produce a 2D image 24, which for example may be a grayscale or color image with pixel information. The eye camera 16 may be a 3D camera and may produce a 3D image 24, which for example may comprise depth information. It is also possible that the system 10 comprises two eye cameras 16 directed to the two eyes 18 of the person or that the eye camera 16 captures an image of both eyes 18, from which two reflection images 24 may be extracted. It also may be possible that two eye cameras 16 are directed towards one eye, such that depth information can be determined from the two reflection images 24 from the two eye cameras. Furthermore, with two or more eye cameras 16 for one eye 18, the cameras may observe the complete surface of the cornea and/or the eye 18, which may not be completely observed due to the curvature of the eye 18, when only one camera 16 is used.

Both the environment camera 12 and/or the eye camera 16 may be a camera, which produces a video stream. The visual field image 20 and/or the reflection image 24 may be frames of these video streams.

The visual field image 20 and the reflection image 24 are received in an eye tracking device 26, which for example, may be a PC, laptop, smartphone, game console or embedded device, comprising a processor and software that is adapted for performing the eye tracking method as described above and below.

Fig. 2 shows a further example of an eye tracking system 10 with virtual reality glasses 26. The virtual reality glasses 26 comprise a support 28, which may be used for mounting the virtual reality glasses 26 to the head of a person. To the support 28, a display 30 and one or more eye cameras 16 are mounted. The virtual reality glasses 24 furthermore may comprise an optics 32 for each eye 16, which is also mounted to the support 28.

The system 10 of Fig. 2 also comprises an eye tracking device 26, which receives the reflection images 24 from the eyes 18. However, the eye tracking device 26 generates an image that is sent to the display 30 and displayed by the display 30.

The eye tracking device may use this image as visual field image 20 or at least may extract the visual field image 20 from this display image. Thus, the visual field image 20 is generated by the eye tracking device 26. In other words, the visual field image 20 may be the image that is displayed to the eyes 18 for generating the virtual reality. Usually, two visual field images 20 with two different perspectives for each eye 18 may be produced by the eye tracking device 26.

The system 10 of Fig. 2 (as well as the system 10 of Fig. 1) may comprise one or two eye cameras 16, wherein in the case of two eye cameras 16, each eye camera 16 is directed to one of the eyes 18 or may be directed to one eye 18 (for example to extract depth information from the two different reflection images 24 that may be acquired simultaneously). It is also possible to use four eye cameras 16, wherein one pair of eye cameras 16 is directed to one eye 18 and the other pair of cameras 16 is directed to the other eye 18.

The eye tracking device 26 may be integrated into the virtual reality glasses 26 (i.e. mounted to the support 28) or may only be communicatively connected to the virtual reality glasses 26, for example wireless or via a cable. Analogously to Fig. 1, the eye tracking device 26 of Fig. 2 may be a PC, laptop, smartphone, game console or embedded device.

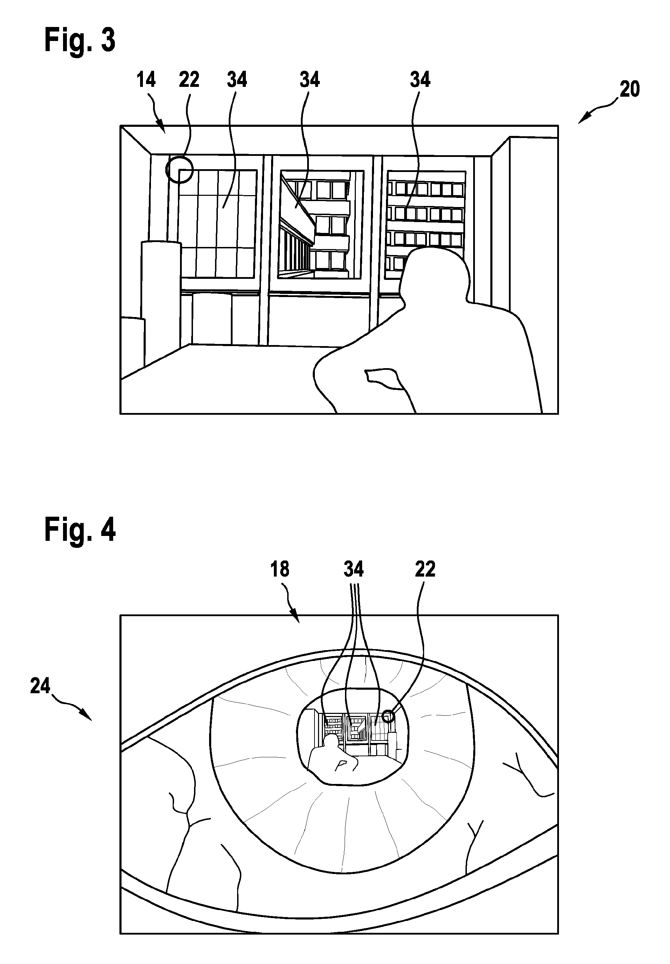

The following Figures 3, 4 and 5 are based on real images taken with cameras, which have been abstracted to conform to requirements of patent application drawings.

Fig. 3 shows an example of a visual field image 20 acquired by a camera 20. The visual field image 20 shows the interior of a room and is directed towards windows 34, which frames have a very high contrast.

Fig. 4 shows a corresponding reflection image 24 of an eye 18 of a person in the room, wherein the windows 34 are reflected on the eye 18. For example, corners of the windows 43 may be used as object features 22.

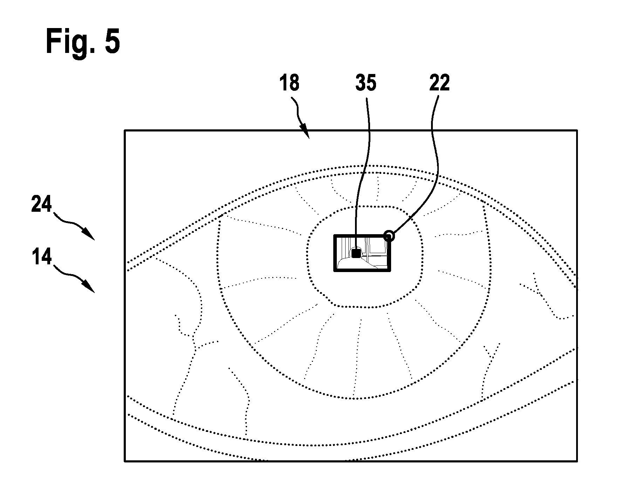

Fig. 5 shows a reflection image 24 on an eye 18 inside virtual reality glasses 26. For example, corners of the border of the display image may be used as object features 22. The reflection on the eye 18 shows the content of the display 30, which has been generated by the eye tracking device 26. A visual marker 35 may be generated at a specific position on the display 30, which also may be used as object feature 22.

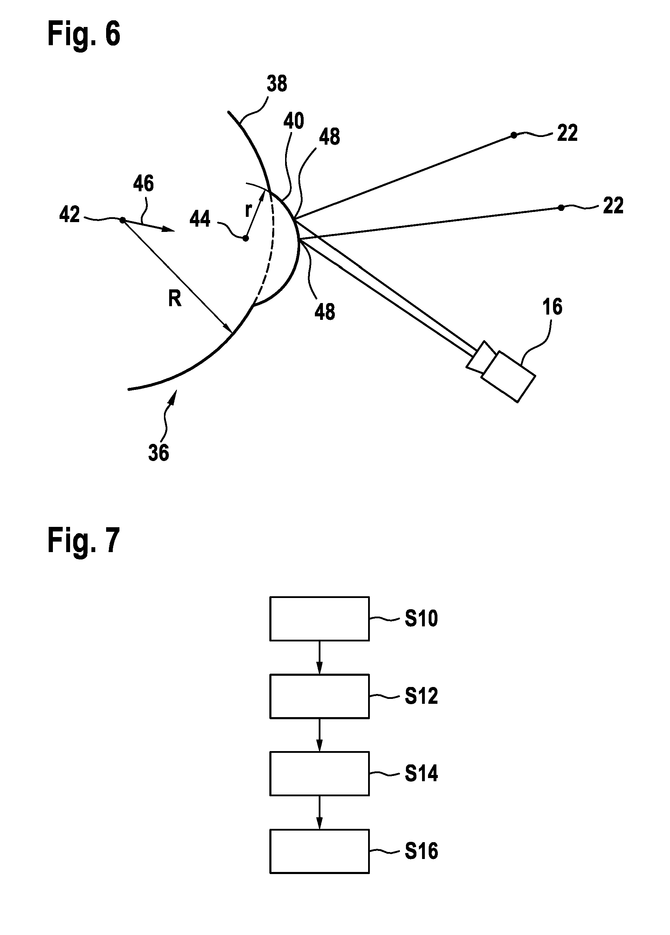

Fig. 6 shows an eye model 36 of an eye 18. It is assumed that the eye ball is a sphere 38 with a first radius R of about 12 mm. The cornea sits on the eye ball and is modelled with a second, smaller sphere 40 with a radius r of about 8 mm. The eye ball (the center 42 of the sphere 38) and the cornea (the center 44 of the sphere 40) are offset with respect to each other and a gaze direction 46 may be determined by calculating the direction from the center 42 to the center 44.

With the model 36, it is assumed that the center 44 may rotate about the center 42.

Fig. 6 furthermore shows object features 22 and light rays from the object features to the eye camera 16. Note that the reflection angles of the light rays in Fig. 6 are not physically correct. From the positions of the object features 22, the position of the eye camera 16 and the positions of the reflections 48 of the object features 22 on the cornea, the positions of the center 44 of the cornea may be calculated. These positions all may be three-dimensional positions. When the center 42 and the camera 16 are fixed, the corresponding system of equations may be solved with the positions and reflection positions of two object features 22. With positions and reflection positions of more than two object features 22, the position of the center 42 additionally may be calculated.

The radiuses r and R may be determined by calibrating the system 10. For example, by performing several test runs with a number of fixed object features 22 with known positions. When the position of the eye 18 is fixed with respect to the eye camera 16 (which may be the case with virtual reality glasses 26), its position also may be determined during a calibration step. The position of the center 42 also may be determined from the reflection image 24, for example based on the diameter of the cornea and/or parameters of the white sclera surrounding the cornea, which may be determined from the reflection image 24.

The positions of the object features 22 may be determined from the visual field image 20, for example, when the visual field image 20 is a 3D image comprising depth information. When the visual field image 20 is displayed on a display 30, such as in virtual reality glasses 26, its three-dimensional position may be calculated from its two-dimensional position on the display.

The positions of an eye camera 16 and/or of a visual field camera 12 may be determined with a position and/or movement sensor fixedly connected to the corresponding camera. For example, when the eye camera 16 is mounted to the head of a person and move together with the head, the position of the eye camera 16 (and optionally the position of the eye 18, i.e. the center 42) may be determined with a movement sensor also mounted to the head, which then has a fixed distance to the eye camera 16 and the eye 18.

Furthermore, the three-dimensional positions and/or reflection positions of object features 22 may be determined based on comparing two reflection images 20 and/or on comparing two visual field images 24 acquired from different positions. With two images 20, 24 acquired from different directions, a parallax of the object features 22 may be determined.

In general, when the relative positions of the eye camera 16, the visual field camera 12 and the eye 18 are known, such as in the setup of virtual reality glasses 26, only the positions and reflection positions of the object features have to be known to determine the gaze direction 46.

It may be possible to determine the two-dimensional positions of the object features 22 in the visual field image and the two-dimensional reflection positions of the object features in the reflection image 24, and after that to determine the gaze direction 46 directly from these values without to calculate the corresponding three-dimensional positions. In this case, parameters may have to be used in the calculation, which may be determined during a calibration step.

In Fig. 7, a flow diagram for a method for eye tracking is shown, which may be performed by the eye tracking device 26 of Fig. 1 or Fig. 2. The eye tracking device 26 may have different modules, which may be software packages installed in the eye tracking device and which, for example, are adapted for image generation, eye tracking, image processing, etc.

In step S10, a visual field image 20 showing at least a part of a visual field of a person is received in the eye tracking device 26 and in particular in a module responsible for eye tracking. The visual field image 20 may be acquired with a camera 12, which observes the visual field 14 of a person or may be displayed on a display 30 in the visual field of a person. In the latter case, the visual field image 20 even may be generated in the eye tracking device 26 by a display image generation module and may be received by the eye tracking module. When the visual field image 20 is generated by the eye tracking device 26, it also may be possible to include one or more specific visual markers 35 (such as spots with high contrast with respect to the remaining generated image) in the visual field image 20.

In step S12, a reflection image 24 acquired with a camera 16 observing an eye 18 of the person is received, the reflection image 24 comprising a reflection on the eye 16 of at least a part of the visual field 14. Usually, more than the cornea is shown in the reflection image 24. For example, also parts of the sclera, an eye lid and other parts of the eye 18 may be visible. It may be possible to extract the part with reflections from the reflection image 24 to reduce the amount of data to be processed. The reflection image 20 may be clipped to a part with reflections.

In step S14, at least two object features 22 are identified in the visual field image 20 and the reflection image 24, wherein each object feature 22 corresponds to an object in the visual field 14 of the person, which object is shown in the visual field image 20 and which object is reflected on the eye 18.

In the beginning of this step, a high level matching of the reflection image 24 to the virtual field image 20 may be performed, to identify and extract the relevant area from the virtual field image 20 and to reduce the amount of data to be processed. The virtual field image 24 may be clipped to a part showing sources of reflections.

Furthermore, in this step, the visual field image 20 and/or the reflection image 24 (or the respective clipped images) may be processed by one or more image processing algorithms to enhance image quality. For example, a contrast enhancing algorithm may be applied to both images 20, 24.

There are several possibilities for identifying object features 22 in both images 20, 24 that belong to the same real object (which may be the corner of a window 34). For example, visual field object features may be extracted from the visual field image 20 with an image processing algorithm and reflected object features may be extracted from the reflection image 24 with the same or a different image processing algorithm. For example, such an image processing algorithm may be an edge detection algorithm or a pattern matching algorithm identifying object features such as corners. Furthermore, a pattern matching algorithm may detect specific object features, such as a special symbol included as visual marker 35 into the visual field image and/or real objects, such as windows, cupboards, monitors, etc.

The object features detected in the visual field image and the object features detected in the reflection image 24 may then be matched with each other to determine object features 22 identifiable in both the visual field image 20 and the reflection image 20. For example, when the image processing algorithm has detected windows 34 in both images, these windows 34 and their corners may be matched with each other by the geometrical arrangement of the windows 34. The leftmost window in the visual field image 20 may be identified with the rightmost window in the reflection image 24 (which is a mirror inverted image).

As another example for identifying object features 22 in the two images 20, 24, one or both images 20, 24 may be distorted until they match with each other as well as possible. The visual field image 20 and the reflection image 24 may be matched with each other by distorting at least one of the visual field image 20 and the reflection image 24 such that object features overlap. The object features 22 may then be identified and/or detected in one of the image 20, 24 with an image processing algorithm as described above and may be matched to the other image 20, 24 with the aid of a distortion map mapping the one image to the other image, which distortion map is based on the above described distortion.

In this case it may be beneficial to clip both images 20, 24 to the parts showing the reflection and the source of the reflection. At least one of the visual field image 20 and the reflection image 24 may be restricted to an area containing overlapping object features 22.

In step S16, a gaze direction 46 of the eye 18 is determined based on the geometrical model 36 of the eye 18 and on positions of the at least two object features 22. With respect to Fig. 6, it has been described how the gaze direction 46 may be determined from the object features 22.

For example, three-dimensional positions of the real objects corresponding to the object features 22 may be determined and/or three-dimensional positions of reflections of the real objects corresponding to the object features 22 may be determined. Furthermore, a three-dimensional position of the eye 18 may be determined. From these values and the geometrical model 36 of the eye 18, the gaze direction 46 may be calculated.

While the invention has been illustrated and described in detail in the drawings and foregoing description, such illustration and description are to be considered illustrative or exemplary and not restrictive; the invention is not limited to the disclosed embodiments. Other variations to the disclosed embodiments can be understood and effected by those skilled in the art and practising the claimed invention, from a study of the drawings, the disclosure, and the appended claims. In the claims, the word "comprising" does not exclude other elements or steps, and the indefinite article "a" or "an" does not exclude a plurality. A single processor or controller or other unit may fulfil the functions of several items recited in the claims. The mere fact that certain measures are recited in mutually different dependent claims does not indicate that a combination of these measures cannot be used to advantage. Any reference signs in the claims should not be construed as limiting the scope.

### LIST OF REFERENCE SYMBOLS

- 10: eye tracking system
- 12: environment camera
- 14: visual field
- 16: eye camera
- 18: eye
- 20: visual field image
- 22: object feature
- 24: reflection image
- 26: virtual reality glasses
- 28: support
- 30: display
- 32: optics
- 34: window (real object)
- 35: visual marker
- 36: eye model
- 38: sphere for eye ball
- 40: sphere for cornea
- 42: spherical center of eye ball
- 44: spherical center of cornea
- 46: gaze direction
- 48: reflection

## Claims

1. A method for eye tracking, the method comprising:
receiving a visual field image (20) showing at least a part of a visual field (14) of a person;
receiving a reflection image (24) acquired with a camera (16) observing an eye (18) of the person, the reflection image (24) comprising a reflection (48) on the eye (18) of at least a part of the visual field (14);
identifying at least two object features (22) in the visual field image (20) and the reflection image (24), wherein each object feature (22) corresponds to an object in the visual field (14) of the person, which object is shown in the visual field image (20) and which object is reflected on the eye (18);
determining a gaze direction (46) of the eye (18) based on a geometrical model (36) of the eye (18) and on positions of the at least two object features (22).

2. The method of claim 1,
wherein visual field object features are extracted from the visual field image (20) with an image processing algorithm;
wherein reflected object features are extracted from the reflection image (24) with an image processing algorithm;
wherein the visual field object features and the reflected object features are matched with each other to determine object features (22) identifiable in both the visual field image (20) and the reflection image (24).

3. The method of claim 1 or 2,
wherein the visual field image (20) and the reflection image (24) are matched with each other by distorting at least one of the visual field image (20) and the reflection image (24) such that object features (22) overlap;
wherein at least one of the visual field image (20) and the reflection image (24) are restricted to an area containing overlapping object features.

4. The method of one of the preceding claims,
wherein three-dimensional positions of the objects corresponding to the object features (22) are determined and the gaze direction (46) is determined based on the three-dimensional positions of the objects.

5. The method of one of the preceding claims,
wherein a three-dimensional position of the eye (18) is determined and the gaze direction (46) is determined based on the three-dimensional position of the eye.

6. The method of one of the preceding claims,
wherein the geometrical model (36) of the eye (18) comprises a spherical model (40) of a cornea.

7. The method of one of the preceding claims,
wherein the visual field image (20) is displayed on a display (30) in the visual field (14) of the person; and/or
wherein the visual field image (20) is displayed on a display (30) of virtual reality glasses (26).

8. The method of claim 7, further comprising:
displaying at least one visual marker (35) at a specific position on the display (30), in the case when the gaze direction (46) is not determinable from the identified object features (22);
wherein the gaze direction (46) is determined based on the specific position.

9. The method of one of claims 1 to 6,
wherein the visual field image (20) is acquired with a second camera (12) observing the visual field (14) of the person.

10. The method of one of the preceding claims,
wherein two separate reflection images (24) are determined for two eyes (18) of the person and wherein gaze directions (46) for each eye (18) are determined based on the two reflection images (24).

11. The method of claim 10,
wherein three-dimensional positions of the objects corresponding to the object features (22) are determined based on comparing the two reflection images (24).

12. A computer program for eye tracking, which, when being executed by a processor, is adapted to carry out the steps of the method of one of claims 1 to 11.

13. A computer-readable medium, in which a computer program according to claim 12 is stored.

14. An eye tracking system (10), comprising:
a first camera (16) for acquiring images of an eye (18), such that a reflection of an object on the eye is acquired by the first camera (16);
a second camera (12) for observing the visual field (14) of the person and for generating a visual field image (20) or a display (30) for displaying the visual field image (20), such that the visual field image (20) is reflected on the eye (18) of the person;
an eye tracking device (26) for performing the method of one of claims 1 to 11.

15. Virtual reality glasses (26), comprising:
a support (28) for mounting the virtual reality glasses (26) to a head of a person;
a display (30) mounted to the support (28) for displaying an image (20) in the visual field (14) of the person;
at least one camera (16) mounted to the support and directed at an eye position for acquiring images (24) of an eye (18) of the person wearing the virtual reality glasses (26).
